# EUROPEAN PATENT APPLICATION

(11) **EP 4 458 645 A1**
(43) Date of publication of application: **06.11.2024**
(21) Application number: 22915937.1
(22) Date of filing: 23.12.2022
(51) Int. Cl.: B61L 23/14, B60L 15/40

(54) **GROUND APPARATUS AND RELAY CONTROL METHOD**

(30) Priority: 28.12.2021 JP 2021214909
(71) Applicant: Kyosan Electric Mfg. Co., Ltd., Tsurumi-ku, Yokohama-shi Kanagawa 230-0031 (JP)
(72) Inventor: SRISOOKSAI, Tossaporn, Yokohama-shi, Kanagawa 230-0031 (JP); NISHIDA, Satoshi, Yokohama-shi, Kanagawa 230-0031 (JP); NAMBU, Shuji, Yokohama-shi, Kanagawa 230-0031 (JP); KOKUBU Takeshi, Yokohama-shi, Kanagawa 230-0031 (JP)
(74) Representative: Hoffmann Eitle
(86) International application number: PCT/JP2022/047556
(87) International publication number: WO 2023/127714

(57) **Abstract**

A railroad crossing obstruction notification system (1) includes a railroad crossing ground system (10) that sends notification information (30) based on detection information on a railroad crossing trouble at a railroad crossing (5) and a relay ground system (20) that is arranged along a track (3) and can relay the notification information (30). The railroad crossing ground system (10) sends the notification information (30) including an instruction to a train (40) based on the detection information and the railroad crossing ID of the railroad crossing (5) in association with each other. If the railroad crossing ID included in the received notification information (30) matches a relay-required railroad crossing ID of the railroad crossing that is stored as a relay target of the notification information, the relay ground system (20) relays the received notification information (30).

## Description

### [TECHNICAL FIELD]

The present disclosure relates to a ground system that relays notification information sent by a railroad crossing ground system, and others.

### [BACKGROUND ART]

A railroad crossing has an obstruction detecting device that detects an obstruction inside the railroad crossing and a trouble warning device (emergency button) in order to prevent accidents. If the obstruction detecting device detects an obstruction or the trouble warning device is operated, an obstruction warning signal flashes to notify a railroad crossing trouble to the crew of the approaching train. In many cases, the driver visually recognizes the flashing of the obstruction warning signal and activates the brake to stop the train. The obstruction warning signal is installed at a position where the obstruction warning signal can be visually recognized at a location from a predetermined distance or more before. However, if the visibility is poor under influence of the weather or due to other factors, the driver may not visually recognize the obstruction warning signal until he/she comes close to the obstruction warning signal.

Thus, there have been devised technologies for stopping the train under pattern control for transferring information on the trouble state of the railroad crossing to the onboard system and performing speed control (for example, refer to Patent Documents 1 to 3). As methods for transferring information to the onboard system, there are methods with the intervention of rails (for example, refer to Patent Documents 1 and 2) and methods through wireless communication (for example, refer to Patent Document 3). In addition, for supporting the driver's determination, there has been devised a technology with which to install a monitoring camera at the railroad crossing (on the ground) for monitoring and grasping the trouble state of the railroad crossing, and transmitting the video images captured by the monitoring camera to the onboard system through wireless communication (for example, refer to Patent Document 4).

### [RELATED-ART DOCUMENTS]

### [PATENT DOCUMENTS]

Patent Document 1: Japanese Unexamined Patent Application Publication No. 2018-207687
Patent Document 2: Japanese Unexamined Patent Application Publication No. 2008-239054
Patent Document 3: Japanese Unexamined Patent Application Publication No. 1990-109773
Patent Document 4: Japanese Unexamined Patent Application Publication No. 2021-45994

### [SUMMARY OF THE INVENTION]

### [TECHNICAL PROBLEM]

As a method for transferring information on the trouble state of a railroad crossing from the ground to the onboard system, there is a method using wireless communication. However, if the dedicated frequency band cannot be secured, the use of a publicly open frequency band is preferred. For example, the use of the frequency band called industrial scientific and medical (ISM) band that requires no license can be considered. However, the ISM band is widely used in various public wireless communication systems such as wireless LAN and Bluetooth (registered trademark). In the case of adopting such a method using a frequency band open to the public, it is inevitable that the wireless communication from the ground to the onboard system suffers radio wave interference from other wireless communication systems.

In addition, in wireless communication using the ISM band, carrier sense is usually required to search for an available communication band at the time of transmission. If there is no available transmission band, a retry need to be made later. Thus, in transmitting information on the trouble state of the railroad crossing, if the communication band is used by another wireless communication system using the ISM band, there will be a waiting time. This causes a problem that emergency information on the trouble state of the railroad crossing may not be immediately transmitted from the ground.

Further, in order to reliably transfer the information from the ground to the onboard system, it is desired to make the amount of data to be transmitted as small as possible.

An issue to be solved by the present disclosure is to implement a mechanism that can transfer information on the trouble state of a railroad crossing from the ground to an onboard system through wireless communication without problem even in the case of using a frequency band open to the public.

### [SOLUTION TO PROBLEM]

According to a first aspect of the disclosure, there is provided a ground system that has a relaying function of receiving notification information sent by a railroad crossing ground system using a predetermined wireless communication protocol and relaying the same, wherein the wireless communication protocol is a communication protocol under which an onboard system of a train is capable of receiving information, the railroad crossing ground system sends the notification information including an instruction to the train based on detection information on a railroad crossing trouble and railroad crossing identification information of a railroad crossing related to the railroad crossing ground system in association with each other, and
the ground system comprises:
a storage section that stores the railroad crossing identification information of the railroad crossing that is a relay target of the notification information, as relay-required railroad crossing identification information;
a reception section that receives the notification information; and
a relay section that determines whether to relay the railroad crossing identification information included in the received notification information through comparison with the relay-required railroad crossing identification information, and if a result of the determination is affirmative, relays the received notification information using the wireless communication protocol.

According to another aspect of the disclosure, there may be provided a relay control method for a ground system to relay notification information sent by a railroad crossing ground system using a predetermined wireless communication protocol, wherein
the wireless communication protocol is a communication protocol under which an onboard system of a train is capable of receiving information,
the railroad crossing ground system is a system that sends the notification information including an instruction to the train based on detection information on a railroad crossing trouble and railroad crossing identification information of a railroad crossing related to the railroad crossing ground system in association with each other, and
the relay control method comprises:
   storing the railroad crossing identification information of the railroad crossing that is a relay target of the notification information, as relay-required railroad crossing identification information;
   receiving the notification information; and
   determining whether to relay the railroad crossing identification information included in the received notification information through comparison with the relay-required railroad crossing identification information, and if a result of the determination is affirmative, relaying the received notification information using the wireless communication protocol.

As a result, in the first aspect and the like of the disclosure, it is possible to implement a mechanism that transfers the information on the trouble state of the railroad crossing from the ground to the onboard system through wireless communication even in the case of using a frequency band open to the public. That is, the railroad crossing ground system sends the notification information based on the detection information of the railroad crossing trouble at the railroad crossing using the wireless communication protocol under which the onboard system of the train can receive the notification information, and the ground system having received the notification information relays the notification information. The railroad crossing ground system sends the notification information regardless of the presence or absence of a train, but the information to be sent is limited to the information necessary for stop control of the train related to the state of the railroad crossing, so that it is possible to swiftly transfer the notification information without unnecessarily occupying the wireless communication band or interfering other wireless communications. Therefore, it is possible to swiftly transfer the notification information to the onboard system even in the case of using the ISM band that is one of the frequency bands open to the public in wireless communication. In addition, although the distance from the railroad crossing to the braking start point of the railroad crossing is relatively as long as about 600 m, it is possible to transfer the notification information related to the railroad crossing to even the onboard system of a train having not yet reached the braking start point, through relaying by the relay ground system.

Also, storing the railroad crossing identification information of the railroad crossing to which the notification information is to be relayed as the relay-required railroad crossing identification information in the ground system eliminates the need to search for a communication path from the railroad crossing ground system to the onboard system of the train. This makes it possible to decrease communications related to the search for a communication path, thereby reducing the amount of data wirelessly communicated in the entire system.

According to a second aspect of the disclosure, in the ground system as defined in the first aspect, the storage section stores the railroad crossing identification information of the railroad crossing existing in a direction from the ground system to the railroad crossing that is a predetermined direction, as the relay-required railroad crossing identification information.

As a result, in the second aspect of the disclosure, if the predetermined direction is the train incoming direction, for example, the ground system can relay only the notification information sent from the railroad crossing existing in the direction coinciding with the train incoming direction. This makes it possible to transfer the notification information sent from the railroad crossing ground system in each train incoming direction such as the inbound direction or the outbound direction, for example.

According to a third aspect of the disclosure, in the ground system as defined in the first or second aspect,
the railroad crossing ground system sends the notification information to be sent in an inbound direction including train incoming direction information indicating the inbound direction, and sends the notification information to be sent in an outbound direction including train incoming direction information indicating the outbound direction, and
the relay section determines that it is not necessary to relay the notification information if the train incoming direction information included in the notification information received by the reception section is different from the direction from the ground system to the railroad crossing related to the notification information.

As a result, in the third aspect of the disclosure, the ground system can relay only the notification information including the train incoming direction information with which the direction from the ground system to the railroad crossing coincides. Accordingly, the ground system can transfer the notification information sent from the railroad crossing ground system in each train incoming direction such as the inbound direction or the outbound direction.

According to a fourth aspect of the disclosure, in the ground system as defined in any one of the first to third aspects,
the notification information further includes an ID of the notification information and information indicating the number of relay counts that is the number of times the notification information was relayed, and
if a plurality of pieces of the notification information with the same ID are received by the reception section, the relay section determines the notification information that includes the smallest number of relay counts and includes the railroad crossing identification information that matches the relay-required railroad crossing identification information, as the notification information to be relayed, updates the number of relay counts included in the determined notification information, and relays the determined notification information.

If a plurality of ground systems is arranged along the track, the identical pieces of notification information may be relayed by the plurality of different ground systems. As a result, in the fourth aspect of the disclosure, in such a case, the numbers of counts of relaying by the ground systems are included in the notification information and the notification information with the smallest number of relay counts, among the identical pieces of notification information, is relayed so that it is possible to reduce the amount of communication in the overall railroad crossing obstruction notification system.

According to a fifth aspect of the disclosure, the ground system as defined in any one of the first to fourth aspects, comprises a function of the railroad crossing ground system.

As a result, in the fifth aspect of the disclosure, the ground system can be implemented as a railroad crossing ground system that can perform relaying as in the first to fourth aspects. At a place where railroad crossings are provided in close proximity to each other, ground systems having only the relaying function are not provided but ground systems having the function of the railroad crossing ground system (that is, the railroad crossing ground systems) are provided so that it is possible to decrease the number of ground systems arranged and implement the simpler configuration of the entire system.

### [BRIEF DESCRIPTION OF DRAWINGS]

FIG. 1 illustrates a schematic configuration of a railroad crossing obstruction notification system.
FIG. 2 illustrates an example of notification information.
FIG. 3 illustrates a functional configuration example of the railroad crossing obstruction notification system.
FIG. 4 illustrates a configuration example of a railroad crossing obstruction notification system according to a first example.
FIG. 5 illustrates a configuration example of a railroad crossing obstruction notification system according to a second example.
FIG. 6 illustrates a configuration example of a railroad crossing obstruction notification system according to a third example.
FIG. 7 illustrates a configuration example of a railroad crossing obstruction notification system according to a fourth example.
FIG. 8 illustrates a configuration example of a railroad crossing obstruction notification system according to a fifth example.

### [DESCRIPTION OF EMBODIMENTS]

Preferred embodiments of the present disclosure are described below with reference to the drawings. Note that embodiments to which the present disclosure is applicable are not limited to the following embodiments. In the drawings, identical elements are denoted with identical reference signs.

### [System Configuration]

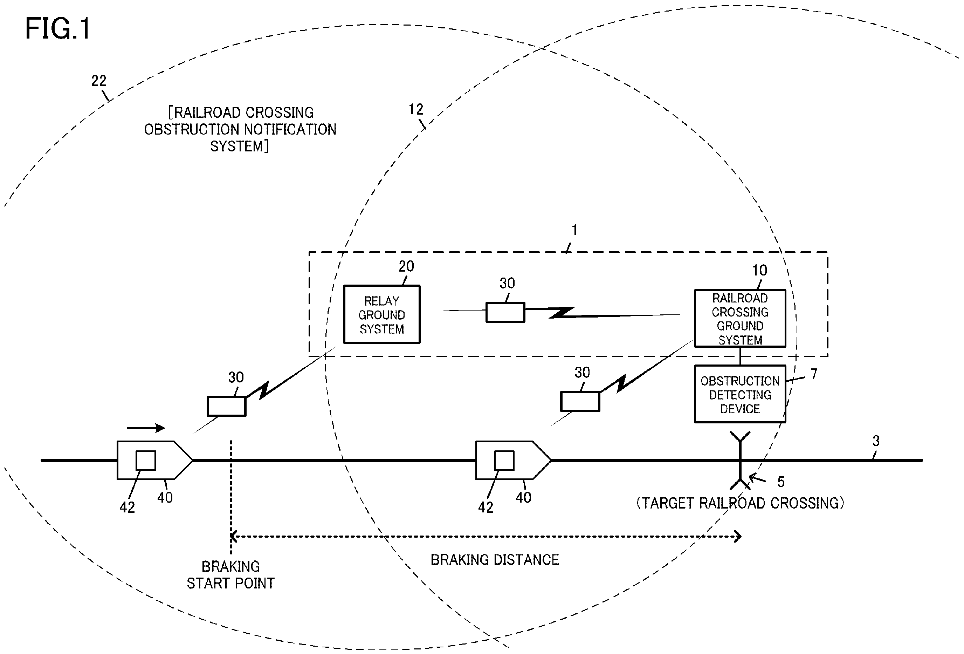

FIG. 1 is a diagram illustrating a schematic configuration example of a railroad crossing obstruction notification system 1 in the present embodiment, which is a bird's-eye view of a railroad track. The railroad crossing obstruction notification system 1 is a system that notifies an instruction according to the detection state of an obstruction at a railroad crossing 5 to an onboard system 42 of a train 40 through wireless communication in order to prevent accidents at the railroad crossing 5. The wireless communication used in the railroad crossing obstruction notification system 1 is wireless communication using an industrial scientific and medical (ISM) band that is one of frequency bands open to the public, such as 2.4 GHz band, 5.7 GHz band, or 920 MHz band. The train 40 is placed under automatic operation control by the onboard system 42. As illustrated in FIG. 1, the railroad crossing obstruction notification system 1 includes a railroad crossing ground system 10 and a relay ground system 20. FIG. 1 illustrates one railroad crossing ground system 10 and one relay ground system 20. Alternatively, the railroad crossing obstruction notification system 1 may include a plurality of railroad crossing ground systems 10 and a plurality of relay ground systems 20.

The railroad crossing ground system 10 is arranged near the railroad crossing that is a notification target (target railroad crossing) 5, and sends notification information 30 based on detection information from an obstruction detecting device 7 installed at the railroad crossing 5 using a wireless communication protocol under which the onboard system 42 of the train 40 can receive the notification information 30. The railroad crossing ground system 10 repeatedly sends the notification information 30 at predetermined time intervals. The railroad crossing ground system 10 also has the function of the relay ground system 20 described later (the function of relaying the received notification information 30).

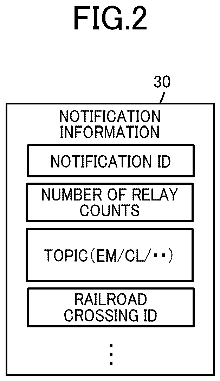

As illustrated in FIG. 2, the notification information 30 is information including the number of relay counts that is information indicating the number of times the notification information 30 was relayed, a topic that is an instruction to the train 40 based on the detection information, and a railroad crossing ID that is railroad crossing identification information of the railroad crossing (target railroad crossing) 5 related to the railroad crossing ground system 10 that is the notification target of the notification information 30, in association with a notification ID that is the ID of the notification information 30. The number of relay counts is the number of times the notification information 30 was relayed by the relay ground system 20 or another railroad crossing ground system 10 as described later. The topic is a "stop instruction (EM)" or a "drive instruction (CL)" to the train 40. For example, if the detection information indicates the presence of an obstruction, the topic can be the "stop instruction (EM)", and if the detection information indicates the absence of an obstruction, the topic can be the "drive instruction (CL)". The notification information 30 may be sent in the state where the closing of the railroad crossing 5 is completed. In the case of sending the notification information 30 including the topic "stop instruction (EM)" and then sending the notification information 30 including the topic "drive instruction (CL)", the railroad crossing ground system 10 may send the notification information 30 including the topic "drive instruction (CL)" on the condition that a release instruction from the outside such as a release instruction by an operation commander has been input to the railroad crossing ground system 10.

The obstruction detecting device 7 detects the presence or absence of an obstruction at the railroad crossing 5 and outputs detection information indicating the presence or absence. The type of obstruction detecting method may be any type such as optical type, millimeter wave type, stereo camera type, image type, and the like, for example. The optical type is a type of method by which a pair of light emitter and light receiver is installed and the presence or absence of an obstruction is detected based on whether an optical signal emitted by the light emitter is received by the light receiver. The millimeter wave type is a type of method by which a millimeter wave is transmitted by a transmitter/receiver and the presence or absence of an obstruction is detected from the time until the reflection signal is received by the transmitter/receiver. The stereo camera type is a type of method by which the presence or absence of an obstruction is detected by distance measurement using two right and left cameras. The image type is a type of method by which the presence or absence of an obstruction is detected by subj ecting a camera-captured image into image processing.

The relay ground system 20 is arranged along a track 3 and relays the notification information 30 sent from the railroad crossing ground system 10. At this time, the relay ground system 20 updates the number of relay counts included in the received notification information 30 to a value incremented by "1" and then relays the notification information 30. The relay ground system 20 is arranged such that the onboard system 42 of the train 40 existing in the range from the railroad crossing 5 to the braking start point away by a predetermined braking distance along the track 3 can continuously receive the notification information 30. More specifically, the relay ground system 20 is arranged such that the onboard system 42 can continuously receive the notification information 30 in the above-described range by either receiving the notification information 30 directly from the railroad crossing ground system 10 or receiving the notification information 30 via the relay ground system 20. In the example of FIG. 1, the relay ground system 20 is arranged such that a wireless communication range 22 constitutes a range from the railroad crossing 5 to the braking start point away by a predetermined braking distance along the track 3, which includes a range not included in a wireless communication range 12 of the railroad crossing ground system 10 and is included in the wireless communication range 12 of the railroad crossing ground system 10.

The relay ground system 20 receives the notification information 30 sent from the railroad crossing ground system 10 or the notification information 30 relayed from another relay ground system 20, determines whether to relay the received notification information 30 by comparing the railroad crossing ID included in the received notification information 30 with a stored relay-required railroad crossing ID. If the determination result is affirmative, the relay ground system 20 relays the received notification information 30 using a wireless communication protocol under which the onboard system 42 of the train 40 can receive the notification information 30. The relay-required railroad crossing ID is the railroad crossing ID of the railroad crossing that is the target of relaying by the relay ground system 20. If the wireless communication range of the relay ground system 20 includes a range in which the notification information 30 on a certain railroad crossing 5 is to be transmitted, the railroad crossing 5 is determined as a relay target.

The onboard system 42 of the train 40 performs the speed control of the own train in response to the topic included in the received notification information 30. Specifically, when the onboard system 42 receives the notification information 30 including the topic "stop instruction (EM)", the onboard system 42 switches to an emergency stop pattern for stopping short of the railroad crossing 5 and decelerates the train 40. Along with this, the onboard system 42 stores the railroad crossing ID included in the notification information 30 as the railroad crossing ID for stopping. After that, upon receipt of the notification information 30 including the topic "drive instruction (CL)", if the railroad crossing ID included in the notification information 30 matches the railroad crossing ID stored as the railroad crossing ID for stopping, the onboard system 42 clears the emergency stop pattern and switches to the original speed control pattern and resumes the traveling of the train 40. In addition, if a plurality of pieces of notification information 30 with the identical notification ID are received at almost the same time (in a predetermined short period), the onboard system 42 adopts the notification information 30 with the smallest number of relay counts.

As described above, the wireless devices in the railroad crossing ground system 10 and the relay ground system 20 in the railroad crossing obstruction notification system 1 can be configured as wireless devices using the ISM band that is one of the frequency bands open to the public and requiring no license. Thus, even if the transmission output permitted to the wireless device in the railroad crossing ground system 10 does not satisfy the communication distance equivalent to the braking distance necessary to stop the train 40 short of the railroad crossing 5, the notification information 30 related to the railroad crossing 5 can be transferred to the onboard system 42 of the train 40 through the relaying by the relay ground system 20 so that the train 40 can be stopped short of the railroad crossing 5. In addition, the information included in the notification information 30 is limited to the contents necessary and sufficient for stopping the train short of the railroad crossing 5 such as the instruction (topic) to the train 40 and the railroad crossing ID that is the identification information of the railroad crossing 5, so that it is possible to reduce the amount of data in the notification information 30 and prevent interference with other wireless communications without occupying the communication band. This also makes it possible to swiftly transfer the notification information 30 and operate the wireless devices in a stable manner.

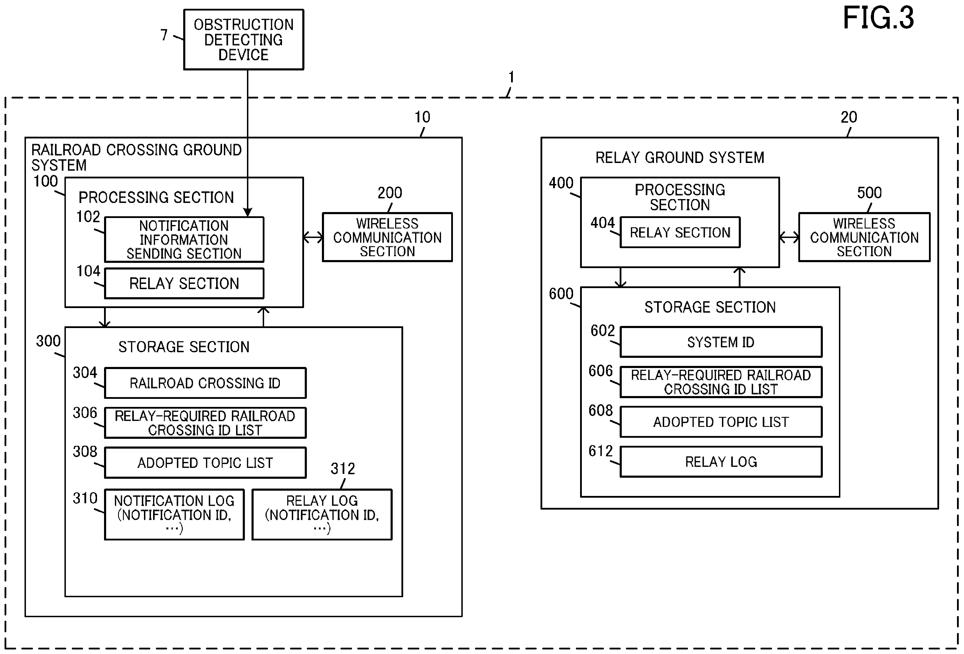

FIG. 3 is a block diagram illustrating a functional configuration of the railroad crossing obstruction notification system 1. As illustrated in FIG. 3, the railroad crossing obstruction notification system 1 includes the railroad crossing ground system 10 and the relay ground system 20.

The railroad crossing ground system 10 includes a processing section 100, a wireless communication section 200, and a storage section 300, and is constructed as a kind of computer system.

The processing section 100 is implemented by an arithmetic device such as a central processing unit (CPU), for example, to transmit instructions or data to the components of the railroad crossing ground system 10 based on programs and data stored in the storage section 300, thereby to perform overall control of the railroad crossing ground system 10. The processing section 100 also has, as functional parts according to the present embodiment, a notification information sending section 102 and a relay section 104. However, each of the functional parts can be implemented as an independent arithmetic operation circuit, such as an application specific integrated circuit (ASIC) or a field programmable gate array (FPGA).

The notification information sending section 102 sends the notification information 30 based on the detection information from the obstruction detecting device 7 installed at the railroad crossing 5 that is the notification target to the onboard system 42 of the train 40 using a wireless communication protocol under which the onboard system 42 of the train 40 can receive the notification information 30. The notification information sending section 102 also sends an instruction to the train 40 based on the detection information and the railroad crossing ID that is the railroad crossing identification information of the railroad crossing 5 related to the railroad crossing ground system 10 (stored in the storage section 300 as the railroad crossing ID 304) included in association with each other in the notification information 30 (see FIG. 2). The instruction to the train 40 is the "stop instruction (EM)" or the "drive instruction (CL)", for example.

The relay section 104 determines whether to relay the railroad crossing ID that is the railroad crossing identification information included in the notification information 30 received by the wireless communication section 200, by collating with relay-required railroad crossing IDs that are relay-required railroad crossing identification information. If the determination result is affirmative, the relay section 104 relays the received notification information 30 using a predetermined wireless communication protocol. The relay-required railroad crossing IDs are stored as a relay-required railroad crossing ID list 306.

The wireless communication section 200 is a functional part that performs actual communication under the control by the processing section 100, is implemented by a wireless device, and wirelessly communicates with external systems such as the relay ground system 20, another railroad crossing ground system 10, and the onboard system 42. For example, the wireless communication section 200 receives the notification information 30 sent from the relay ground system 20 or another railroad crossing ground system 10.

The storage section 300 is implemented by a storage device such as a hard disk, a read only memory (ROM), or a random access memory (RAM), and stores programs and data for the processing section 100 to comprehensively control the railroad crossing ground system 10. The storage section 300 is also used as a work area of the processing section 100, and temporarily stores results of arithmetic operations executed by the processing section 100 in accordance with various programs, data input through the wireless communication section 200, and the like. In the present embodiment, the storage section 300 stores the railroad crossing ID 304 of the railroad crossing 5 that is the notification target (target railroad crossing), the relay-required railroad crossing ID list 306 that is a list of the relay-required railroad crossing IDs, an adopted topic list 308 that is a list of topics to be adopted as the notification information to the own system, a notification log 310, and a relay log 312.

The notification log 310 is data on the notification information 30 sent by the notification information sending section 102, which contains the notification ID, contents, and sending date and time of each notification information 30. The relay log 312 is data on the notification information 30 relayed by the relay section 104, which contains the notification ID, contents, and sending date and time of each notification information 30.

In the present embodiment, the railroad crossing ground system 10 is a system that has some of the functions of the relay ground system 20 (the function of relaying the notification information 30), but may be configured as a system that does not have the function of relaying the notification information 30.

The relay ground system 20 includes a processing section 400, a wireless communication section 500, and a storage section 600, and is configured as a kind of computer system.

The processing section 400 has a relay section 404 that is a functional part similar to the relay section 104 of the railroad crossing ground system 10.

The wireless communication section 500 is implemented by a wireless device, and wirelessly communicates with external systems such as the railroad crossing ground system 10, another relay ground system 20, and the onboard system 42.

The storage section 600 stores a system ID 602 that is the ID of the own system, a relay-required railroad crossing ID list 606, an adopted topic list 608, and a relay log 612. The relay-required railroad crossing ID list 606 is data that is similar to the relay-required railroad crossing ID list 306 stored in the storage section 300 of the railroad crossing ground system 10. The adopted topic list 608 is data that is similar to the adopted topic list 308 stored in the storage section 300 of the railroad crossing ground system 10. The relay log 612 is data that is similar to the relay log 312 stored in the storage section 300 of the railroad crossing ground system 10.

Subsequently, specific five examples (first to fifth examples) of the railroad crossing obstruction notification system 1 will be described. In all the examples, the functional configurations of the railroad crossing ground system 10 and the relay ground system 20 are similar to those described above with reference to FIG. 3. However, reference signs are made different for the convenience of separately describing the examples.

### <First Example>

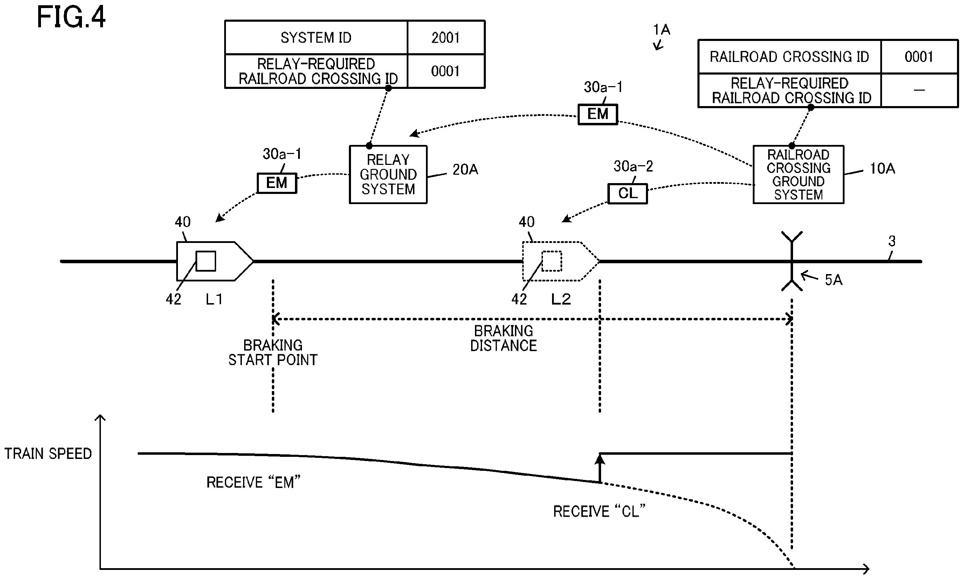

FIG. 4 is a diagram describing a railroad crossing obstruction notification system 1A that is the first example. The graph on the lower side of FIG. 4 indicates a speed control pattern that is used as a standard for the onboard system 42 to control the traveling speed of the train 40, in which the horizontal axis indicates the position and the vertical axis indicates the speed. In the example of FIG. 4, the railroad crossing obstruction notification system 1A includes a railroad crossing ground system 10A that has a railroad crossing 5A as a notification target railroad crossing (target railroad crossing) and a relay ground system 20A that is arranged near the braking start point of the railroad crossing 5A. The range from the railroad crossing 5A to the braking start point along a track 3 is covered with the wireless communication ranges of the railroad crossing ground system 10A and the relay ground system 20A. The relay ground system 20A is installed in the wireless communication range of the railroad crossing ground system 10A. Therefore, the onboard system 42 of the train 40 existing between the braking start point and the railroad crossing 5A can continuously receive the notification information 30 sent from the railroad crossing ground system 10A. The railroad crossing ground system 10A sends the notification information 30 based on the detection information from an obstruction detecting device (not illustrated) of the railroad crossing 5A that includes the railroad crossing ID "0001" of the railroad crossing 5A. The relay ground system 20A also stores the railroad crossing ID "0001" of the railroad crossing 5A as a relay-required railroad crossing ID.

Operations of the railroad crossing obstruction notification system 1A will be described. The train 40 is approaching the railroad crossing 5A in the incoming direction that is the rightward direction. When the train 40 is traveling at a position L1 before arrival of the braking start point of the railroad crossing 5A, assume that the railroad crossing ground system 10A sends notification information 30a-1 that includes the topic "stop instruction (EM)". The sent notification information 30a-1 is received by the relay ground system 20A. Since the railroad crossing ID included in the received notification information 30a-1 matches the stored relay-required railroad crossing ID, the relay ground system 20A relays the notification information 30a-1. At this point of time, the train 40 does not fall within the wireless communication range of the railroad crossing ground system 10A but falls within the wireless communication range of the relay ground system 20A. Thus, the notification information 30a-1 relayed by the relay ground system 20A is received by the onboard system 42 of the train 40. In response to the topic "stop instruction (EM)" included in the received notification information 30a-1, the onboard system 42 switches to the speed control pattern for emergency stop (emergency stop pattern) and decelerates the train 40 in accordance with the emergency stop pattern.

After that, when the train 40 is traveling at a position L2 before arrival of the railroad crossing 5A, assume that the railroad crossing ground system 10A sends notification information 30a-2 including the topic "drive instruction (CL)". The position L2 of the train at this point of time falls within the wireless communication range of the railroad crossing ground system 10A. Thus, the sent notification information 30a-2 is received by the onboard system 42 of the train 40 without intervention of relaying by the relay ground system 20A. In response to the topic "drive instruction (CL)" included in the received notification information 30a-2, the onboard system 42 erases the current emergency stop pattern, switches to the original speed control pattern, and resumes the driving in accordance with the speed control pattern and passes through the railroad crossing 5A.

### <Second Example>

In some cases, the train 40 decelerates in accordance with the emergency stop pattern, but may pass through the railroad crossing 5, depending on the relationship between the timing of sending the notification information 30 by the railroad crossing ground system 10 and the position of the train 40 at that time. In order to handle such cases, a second example is a railroad crossing obstruction notification system 1B in which a relay ground system 20 is arranged also ahead of (across) a railroad crossing 5 such that a train 40 having stopped after passing through the railroad crossing 5 can receive notification information 30 including the topic "drive instruction (CL)" to resume the driving.

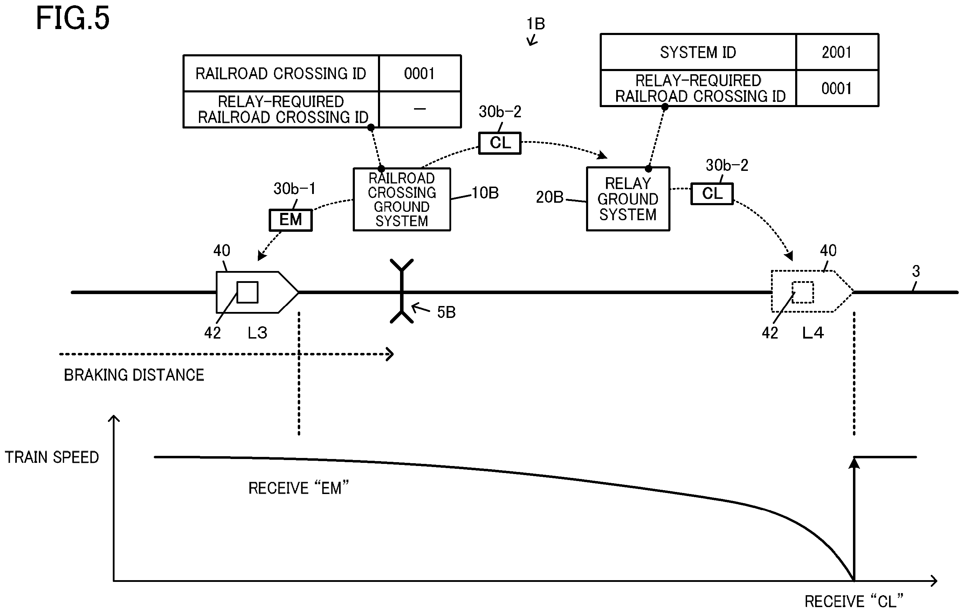

FIG. 5 is a diagram describing the railroad crossing obstruction notification system 1B that is the second example. As in FIG. 4, the lower side of FIG. 5 shows a speed control pattern that is used as a standard by an onboard system 42 to control the traveling speed of the train 40. In the example of FIG. 5, the railroad crossing obstruction notification system 1B includes a railroad crossing ground system 10B that has a railroad crossing 5B as a notification target railroad crossing (target railroad crossing) and a relay ground system 20B that is arranged ahead of (across) the railroad crossing 5B. The relay ground system 20B is arranged at a position that falls within the wireless communication range of the railroad crossing ground system 10B. Accordingly, even if the train 40 activates the brake in accordance with the emergency stop pattern but actually stops after passing through the railroad crossing 5B, the onboard system 42 of the train 40 can receive the notification information 30 from the railroad crossing ground system 10B or the relay ground system 20B.

The relay ground system 20B stores the railroad crossing ID "0001" of the railroad crossing 5B as a relay-required railroad crossing ID. The relay ground system 20B arranged ahead of (across) the railroad crossing 5B is set to relay only the notification information 30 including the topic "drive instruction (CL)" (that is, the relay ground system 20B does not relay the notification information 30 including the topic "stop instruction (EM)"). Therefore, the relay ground system 20B arranged ahead of (across) the railroad crossing 5B may store the relay-required railroad crossing IDs in combination with the topic "drive instruction (CL)" to be relayed.

Operations of the railroad crossing obstruction notification system 1B will be described. When the train 40 is traveling at a position L3 before arrival of the railroad crossing 5B, assume that the railroad crossing ground system 10B sends notification information 30b-1 including the topic "stop instruction (EM)". Since the position L3 of the train 40 at this point of time falls within the wireless communication range of the railroad crossing ground system 10B, the onboard system 42 of the train 40 receives the notification information 30b-1 sent from the railroad crossing ground system 10B. Then, in response to the topic "stop instruction (EM)" included in the received notification information 30b-1, assume that the train 40 decelerates in accordance with the emergency stop pattern but stops at a position L4 that has passed through the railroad crossing 5B by a significant distance.

After the stoppage of the train 40, assume that the relay ground system 20B sends notification information 30b-2 including the topic "drive instruction (CL)". The sent notification information 30b-2 is received and relayed by the relay ground system 20B. The position L4 of the train 40 at this point of time is out of the wireless communication range of the railroad crossing ground system 10B and falls within the wireless communication range of the relay ground system 20B. Thus, the onboard system 42 of the train 40 receives the notification information 30b-2 relayed by the relay ground system 20B. Then, in response to the topic "drive instruction (CL)" included in the received notification information 30b-2, the onboard system 42 erases the emergency stop pattern and returns to the speed control pattern for resuming the driving, and resumes the driving.

### <Third Example>

In the first and second examples, up to one relay ground system 20 is arranged in each direction (forward direction or backward direction) along the track 3 as viewed from the railroad crossing ground system 10. The present disclosure is not limited to these examples, and in some cases, a plurality of relay ground systems 20 may be arranged in each direction along the track 3 as viewed from the railroad crossing ground system 10. In such cases, the relay-required railroad crossing IDs stored in each relay ground system 20 are set such that the number of relay counts of the notification information 30 is small in consideration of the wireless communication ranges of the railroad crossing ground system 10 and each relay ground system 20. Specifically, in such cases, a plurality of relay ground systems 20 is arranged in the identical direction along the track 3 as viewed from the railroad crossing ground system 10, and all the plurality of relay ground systems 20 are arranged in the wireless communication range of the railroad crossing ground system 10. In such cases, among the plurality of relay ground systems 20, only the relay ground system 20 installed at the position most distant from the railroad crossing ground system 10 along the track 3 stores the railroad crossing ID of the target railroad crossing of the railroad crossing ground system 10 as the relay-required railroad crossing ID.

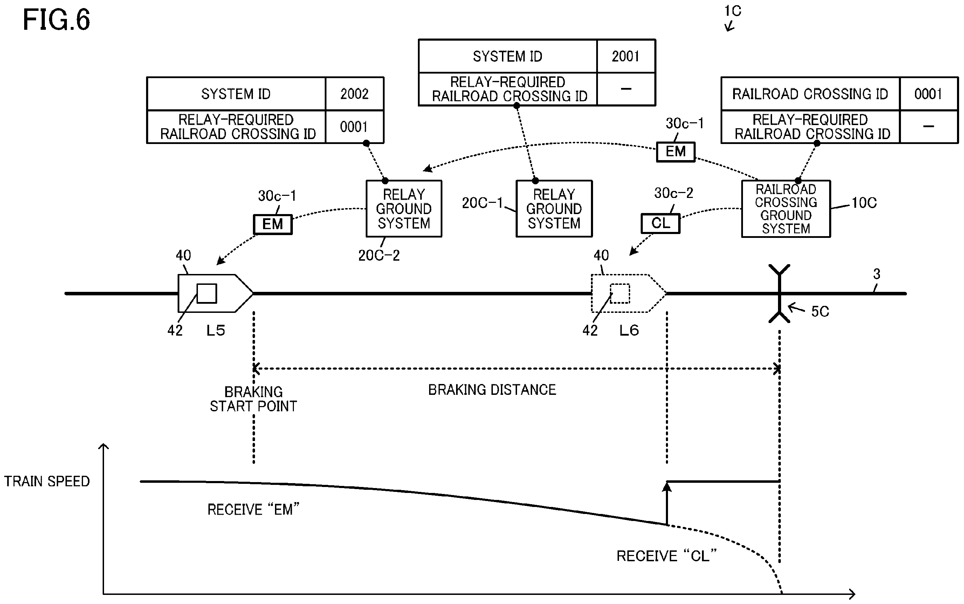

FIG. 6 is a diagram describing a railroad crossing obstruction notification system 1C that is a third example. As in FIG. 4, the lower side of FIG. 6 shows a speed control pattern that is used as a standard by an onboard system 42 to control the traveling speed of a train 40. In the example of FIG. 6, the railroad crossing obstruction notification system 1C includes a railroad crossing system 10C that has a railroad crossing 5C as a notification target railroad crossing (target railroad crossing) and relay ground systems 20C-1 and 20C-2 that are arranged short of the railroad crossing 5C as viewed from the train 40. Both the relay ground system 20C-1 and 20C-2 fall within the wireless communication range of the railroad crossing ground system 10C and can receive notification information sent from the railroad crossing ground system 10C. In the third example, however, only the relay ground system 20C-2 more distant from the railroad crossing ground system 10C stores the railroad crossing ID of the railroad crossing 5C that is the target railroad crossing of the railroad crossing ground system 10C, as the relay-required railroad crossing ID. Therefore, the relay ground system 20C-1 does not relay the notification information from the railroad crossing ground system 10C. Only the relay ground system 20C-2 relays the notification information from the railroad crossing ground system 10C.

Specifically, the operations of the railroad crossing obstruction notification system 1C will be described. When the train 40 is traveling at a position L5 before arrival of the braking start point of the railroad crossing 5C, assume that the railroad crossing ground system 10C sends notification information 30c-1 including the topic "stop instruction (EM)". The sent notification information 30c-1 is received and relayed by the relay ground system 20C-2. The relay ground system 20C-1 also receives the notification information 30c-1 but the railroad crossing ID included in the notification information 30c-1 does not match the stored relay-required railroad crossing ID, and the relay ground system 20C-1 does not relay the notification information 30c-1. Then, the onboard system 42 of the train 40 receives the notification information 30c-1 sent from the relay ground system 20C-2, switches to the emergency stop pattern in response to the topic "stop instruction (EM)" included in the notification information 30c-1, and decelerates in accordance with the emergency stop pattern.

After that, when the train 40 is traveling at a position L6 short of the railroad crossing 5C, assume that the railroad crossing ground system 10C sends notification information 30c-2 including the topic "drive instruction (CL)". The position L6 of the train 40 at this point of time falls within the wireless communication range of the railroad crossing ground system 10C. Thus, the onboard system 42 of the train 40 can receive the notification information 30c-2 sent from the railroad crossing ground system 10C. In response to the topic "drive instruction (CL)" included in the received notification information 30c-2, the onboard system 42 erases the current emergency stop pattern, switches to the original speed control pattern, and returns to the driving in accordance with the speed control pattern and passes through the railroad crossing 5C.

### <Fourth Example>

A plurality of railroad crossings may be provided in proximity to each other at some places in some train lines. Since the railroad crossing ground system 10 also has the function of the relay ground system 20 (the function of relaying the notification information 30), the railroad crossing ground system 10 exerts the relaying function at such places so that it is not necessary to separately provide the relay ground system 20.

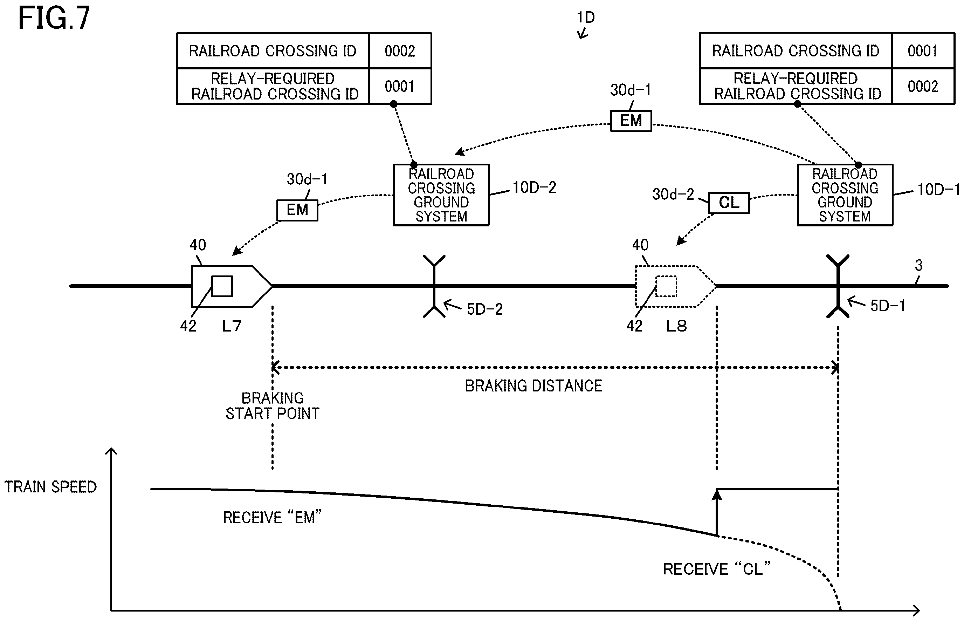

FIG. 7 is a diagram describing a railroad crossing obstruction notification system 1D that is a fourth example. As in FIG. 4, the lower side of FIG. 7 shows a speed control pattern that is used as a standard by an onboard system 42 to control the traveling speed of a train 40. In the example of FIG. 7, the railroad crossing obstruction notification system 1D includes two railroad crossing ground systems 10D-1 and 10D-2 that have railroad crossings 5D-1 and 5D-2 as notification target railroad crossings (target railroad crossings) at places proximate to each other, respectively. The railroad crossing ground systems 10D-1 and 10D-2 send notification information 30 based on detection information from obstruction detecting devices (not illustrated) at the target railroad crossings, respectively. Each of the railroad crossing ground systems 10D-1 and 10D-2 is arranged within the wireless communication range of the other railroad crossing ground system 10D-1 or 10D-2. In addition, each of the railroad crossing ground systems 10D-1 and 10D-2 stores the railroad crossing ID of the target railroad crossing of the other railroad crossing ground system 10D-1 or 10D-2 as the relay-required railroad crossing ID in order to implement the function of relaying the notification information 30 to the other railroad crossing ground system 10D-1 or 10D-2.

Operations of the railroad crossing obstruction notification system 1D will be described. When the train 40 is traveling at a position L7 before arrival of the braking start point of the railroad crossing 5D-1, assume that the railroad crossing ground system 10D-1 sends notification information 30d-1 including the topic "stop instruction (EM)". The sent notification information 30d-1 is received and relayed by the railroad crossing ground system 10D-2 and is received by the onboard system 42 of the train 40. In response to the topic "stop instruction (EM)" included in the received notification information 30d-1, the onboard system 42 of the train 40 switches to the emergency stop pattern and decelerates the train 40.

After that, when the train 40 is traveling at a position L8 before arrival of the railroad crossing 5D-1, assume that the railroad crossing ground system 10D-1 sends notification information 30d-2 including the topic "drive instruction (CL)". Since the position L8 of the train 40 at this point of time falls within the wireless communication range of the railroad crossing ground system 10D-1, the onboard system 42 of the train 40 receives the notification information 30d-2 sent from the railroad crossing ground system 10D-1, performs the traveling control so as to return to the original train control pattern in response to the topic "drive instruction (CL)" included in the notification information 30d-2, and passes through the railroad crossing 5D-1.

### <Fifth Example>

In the first to fourth examples, the train 40 comes from one direction. In a fifth example, a train 40 comes from two directions (inbound direction and outbound direction).

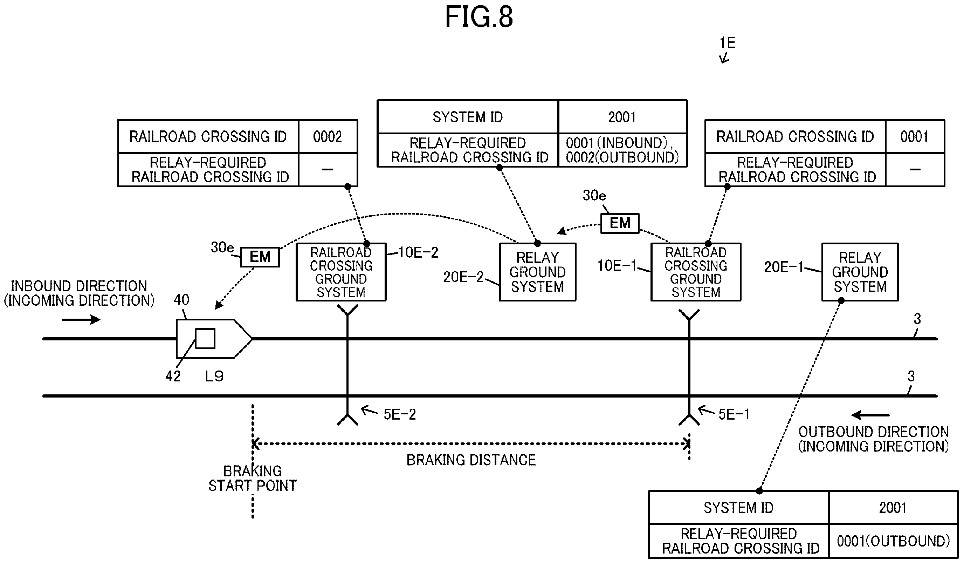

FIG. 8 is a diagram describing a railroad crossing obstruction notification system 1E that is the fifth example. FIG. 8 illustrates an example of double track, but the same system is applicable to the case where the trains travel in single tracks in two directions. In the example illustrated in FIG. 8, the railroad crossing obstruction notification system 1E includes railroad crossing ground systems 10E-1 and 10E-2 that have railroad crossings 5E-1 and 5E-2 as notification target railroad crossings (target railroad crossings), respectively, and relay ground systems 20E-1 to 20E-3. The railroad crossing ground systems 10E-1 and 10E-2 send notification information 30 including train incoming direction information indicating the inbound direction to the train 40 of which the incoming direction toward the notification target railroad crossings (target railroad crossings) is the inbound direction. The railroad crossing ground systems 10E-1 and 10E-2 also send the notification information 30 including the train incoming direction information indicating the outbound direction to the train 40 of which the incoming direction toward the target railroad crossings is the outbound direction. The closing control of the railroad crossings 5 is performed in accordance with the approach of the train 40. The railroad crossing ground systems 10E-1 and 10E-2 are configured to acquire the incoming direction of the train 40 from a railroad crossing control device and others which are not illustrated.

The relay ground systems 20E-1 and 20E-2 store the railroad crossing IDs of the railroad crossings 5 existing in the direction from the relay ground systems 20E-1 and 20E-2 to the railroad crossings 5 that is a predetermined train incoming direction, as relay-required railroad crossing IDs. If the train incoming direction information included in the received notification information 30 is different from the direction from the relay ground systems 20E-1 and 20E-2 to the railroad crossings 5 related to the notification information 30, the relay ground systems 20E-1 and 20E-2 determine that it is not necessary to relay the notification information 30.

Specifically, the relay ground systems 20E-1 and 20E-2 store the railroad crossing IDs of the railroad crossings 5 existing in the direction from the relay ground systems 20E-1 and 20E-2 that is the inbound direction, as the relay-required railroad crossing IDs in association with the "inbound" direction. The relay ground systems 20E-1 and 20E-2 also store the railroad crossing IDs of the railroad crossings 5 existing in the direction from the relay ground systems 20E-1 and 20E-2 that is the outbound direction, as the relay-required railroad crossing IDs in association with the "outbound" direction. Then, if a combination of the railroad crossing ID and the train incoming direction information included in the received notification information 30 does not match a stored combination of the relay-required railroad crossing ID and the direction, the relay ground systems 20E-1 and 20E-2 determine that it is not necessary to relay the received notification information 30 and do not relay the notification information 30. Only if the combinations match, the relay ground systems 20E-1 and 20E-2 relay the notification information 30. Therefore, the notification information 30 sent by the railroad crossing ground systems 10E-1 and 10E-2 is relayed only in the direction toward the train 40 approaching to the target railroad crossing.

In the example of FIG. 8, the relay ground system 20E-1 stores the railroad crossing ID "0001" of the railroad crossing 5E-1 existing in the outbound direction as the relay-required railroad crossing ID in association with the "outbound" direction toward the railroad crossing 5E-1. The relay ground system 20E-2 stores the railroad crossing ID "0001" of the railroad crossing 5E-1 existing in the inbound direction as the relay-required railroad crossing ID in association with the "inbound" direction toward the railroad crossing 5E-1. The relay ground system 20E-2 also stores the railroad crossing ID "0002" of the railroad crossing 5E-2 existing in the outbound direction as the relay-required railroad crossing ID in association with the "outbound" direction toward the railroad crossing SE-2.

Operations of the railroad crossing obstruction notification system 1E will be described. When the train 40 is traveling at a position L9 close to the braking start point of the railroad crossing 5E-1, assume that the railroad crossing ground system 10E-1 that has the railroad crossing 5E-1 as the target railroad crossing sends notification information 30e including the train incoming direction information "inbound direction" as the notification information 30 to the train 40 traveling in the inbound direction. The notification information 30e is received by the relay ground system 20E-2. Since a combination of the railroad crossing ID "0001" included in the received notification information 30e and the train incoming direction information "inbound direction" matches a stored combination of the relay-required railroad crossing ID and the direction, the relay ground system 20E-2 relays the notification information 30e. The relayed notification information 30e is received by the onboard system 42 of the train 40. In addition, the notification information 30e sent by the railroad crossing ground system 10E-1 is also received by the relay ground system 20E-1. However, the train incoming direction information "inbound direction" included in the notification information 30e does not match the "outbound" direction stored in association with the relay-required railroad crossing ID in the relay ground system 20E-1, so that the relay ground system 20E-1 determines that it is not necessary to relay the notification information 30e, and does not relay the notification information 30e.

The railroad crossing ground systems 10 and the relay ground systems 20 may be configured and arranged as separate systems for different train incoming directions (inbound direction and outbound direction). Specifically, the railroad crossing ground system 10 dedicated to the inbound direction and the railroad crossing ground system 10 dedicated to the outbound direction are arranged. The railroad crossing ground system 10 dedicated to the inbound direction is the railroad crossing ground system 10 that sends the notification information 30 to the train 40 of which the incoming direction toward the target railroad crossing is the inbound direction (the notification information including the train incoming direction information "inbound direction"). The railroad crossing ground system 10 dedicated to the outbound direction is the railroad crossing ground system that sends the notification information 30 to the train 40 of which the incoming direction toward the target railroad crossing is the outbound direction (the notification information 30 including the train incoming direction information "outbound direction"). Similarly, the relay ground system 20 dedicated to the inbound direction and the relay ground system 20 dedicated to the outbound direction are arranged. The relay ground system 20 dedicated to the inbound direction is the relay ground system 20 that stores the railroad crossing ID of the railroad crossing 5 of which the direction from the relay ground system 20 is the inbound direction, as the relay-required railroad crossing ID. The relay ground system 20 dedicated to the outbound direction is the relay ground system 20 that stores the railroad crossing ID of the railroad crossing 5 of which the direction from the relay ground system 20 is the outbound direction, as the relay-required railroad crossing ID.

### [Operations and Advantageous Effects]

According to the present embodiment, it is possible to implement a mechanism that transfers the information on the trouble state of the railroad crossing 5 from the ground to the onboard system through wireless communication even in the case of using a frequency band open to the public. That is, the railroad crossing ground system 10 sends the notification information 30 based on the detection information of an obstruction at the railroad crossing 5 from the obstruction detecting device 7 using the wireless communication protocol under which the onboard system 42 of the train 40 can receive the notification information 30, and the relay ground system 20 having received the notification information 30 relays the notification information 30. The railroad crossing ground system 10 sends the notification information 30 regardless of the presence or absence of the train 40, but the information to be sent is limited to the information necessary for stop control of the train related to the state of the railroad crossing, so that it is possible to swiftly transfer the notification information without unnecessarily occupying the wireless communication band or interfering other wireless communications. Therefore, it is possible to swiftly transfer the notification information 30 to the onboard system 42 even in the case of using the ISM band that is one of the frequency bands open to the public in wireless communication. In addition, although the distance from the railroad crossing 5 to the braking start point of the railroad crossing 5 is relatively as long as about 600 m, it is possible to transfer the notification information 30 related to the railroad crossing 5 to even the onboard system 42 of the train 40 having not yet reached the braking start point, through relaying by the relay ground system 20.

Storing the railroad crossing ID that is the railroad crossing identification information of the railroad crossing 5 to which the notification information 30 is to be relayed as the relay-required railroad crossing ID that is the relay-required railroad crossing identification information in the relay ground system 20 eliminates the need to search for a communication path from the railroad crossing ground system 10 to the onboard system 42 of the train 40. This makes it possible to decrease communications related to the search for a communication path, thereby reducing the amount of data wirelessly communicated in the entire system.

### [Modifications]

The embodiments to which the present disclosure is applicable are not limited to the above-described embodiment and can be changed as appropriate without deviating from the gist of the present disclosure.

### (A) Communication from the onboard system 42

In the above-described embodiments, unidirectional communication from the railroad crossing ground system 10 to the onboard system 42 is performed. However, communication from the onboard system 42 to the railroad crossing ground system 10 may be performed. Specifically, if the trouble state of the railroad crossing 5 ahead of the onboard system 42 is to be acquired, the onboard system 42 may send the notification information 30 including a topic "transfer instruction (RQ)" as an example. In this case, the onboard system 42 sends the notification information 30 including the system ID of the own system. Upon receipt of the notification information 30, the relay ground system 20 recognizes from the system ID that the transmission source is the onboard system 42, and relays the notification information 30 including the topic "transfer instruction (RQ)". Upon receipt of the notification information 30, the railroad crossing ground system 10 returns the latest notification information 30 on the notification target railroad crossing (target railroad crossing) 5. Subsequently, the relay ground system 20 relays the returned latest notification information 30, and the onboard system 42 receives the same.

### (B) Train incoming direction information

In the fifth example, instead of including the train incoming direction information in the notification information 30, a difference in the carrier frequency of the notification information 30 may be set as the train incoming direction.

### (C) Relay ground system 20

In train lines in which automatic train control (ATC) devices and continuous automatic train stop (ATS) devices are adopted, the notification information 30 may be transmitted to the onboard system 42 via a track circuit instead of the relay ground system 20. In train lines in which point control ATS devices are adopted, a balise may be provided at a position short of the braking start point of the railroad crossing 5, and the notification information 30 including the topic "stop instruction (EM)" may be transmitted to the onboard system 42 via the balise.

### (D) Relaying of the identical notification information 30

Upon receipt of a plurality of pieces of notification information 30 with the same notification ID, the relay ground system 20 may determine the notification information 30 that includes the smallest number of relay counts and includes the railroad crossing ID that is the railroad crossing identification information matching the relay-required railroad crossing ID that is the relay-required railroad crossing identification information, as the notification information 30 to be relayed, and updates the number of relay counts included in the notification information 30 and then relays the notification information 30.

That is, the relay ground system 20 relays the notification information 30 that includes the railroad crossing ID matching the stored relay-required railroad crossing ID. However, since pluralities of railroad crossing ground systems 10 and relay ground systems 20 are arranged, a plurality of pieces of notification information 30 with the identical notification ID may be sent or relayed from these systems and may be received at almost the same time (that is, in a predetermined short time). In such a case, among the plurality of pieces of notification information 30 with the same notification ID received in the predetermined short time, only the notification information 30 with the smallest number of relay counts is relayed. This reduces errors in transferring the notification information and saves the amount of communication in the overall railroad crossing obstruction notification system 1.

### (E) Detection information on railroad crossing trouble

The notification information 30 is information based on detection information on railroad crossing trouble at the railroad crossing 5. However, the detection information may be other than the detection information from the obstruction detecting device 7 installed at the railroad crossing 5. For example, the detection information on the detection of a trouble in the passage of the train 40 through the railroad crossing 5 may be adopted, such as the detection information on the detection of an operation (press) on a trouble detection device (emergency button) installed in the railroad crossing 5, the detection information on the detection of occurrence of a gate closing failure due to a fault in the railroad crossing gate, or the detection information on the detection of breakage of a railroad crossing gate pole. Further, the notification information 30 may include the details of the detection (the detection of an obstruction or an operation of the emergency button).

### [REFERENCE SIGNS LIST]

- 1 (1A to 1E): railroad crossing obstruction notification system
- 10 (10A to 10E): railroad crossing ground system
- 12: wireless communication range
- 100: processing section
- 102: notification information sending section
- 104: relay section
- 200: wireless communication section
- 300: storage section
- 302: system ID
- 304: target railroad crossing ID
- 306: relay-required railroad crossing ID list
- 308: adopted topic list
- 310: notification log
- 312: relay log
- 20 (20A to 20E): relay ground system
- 22: wireless communication range
- 400: processing section
- 404: relay section
- 500: wireless communication section
- 600: storage section
- 602: system ID
- 606: relay-required railroad crossing ID list
- 608: adopted topic list
- 612: relay log
- 30 (30a to 30e): notification information
- 3: track
- 5 (5A to 5E): railroad crossing
- 7: obstruction detecting device
- 40: train
- 42: onboard system

## Claims

1. A ground system that has a relaying function of receiving notification information sent by a railroad crossing ground system using a predetermined wireless communication protocol and relaying the same, wherein
the wireless communication protocol is a communication protocol under which an onboard system of a train is capable of receiving information,
the railroad crossing ground system sends the notification information including an instruction to the train based on detection information on a railroad crossing trouble and railroad crossing identification information of a railroad crossing related to the railroad crossing ground system in association with each other, and
the ground system comprises:
a storage section that stores the railroad crossing identification information of the railroad crossing that is a relay target of the notification information, as relay-required railroad crossing identification information;
a reception section that receives the notification information; and
a relay section that determines whether to relay the railroad crossing identification information included in the received notification information through comparison with the relay-required railroad crossing identification information, and if a result of the determination is affirmative, relays the received notification information using the wireless communication protocol.

2. The ground system as defined in claim 1, wherein the storage section stores the railroad crossing identification information of the railroad crossing existing in a direction from the ground system to the railroad crossing that is a predetermined direction, as the relay-required railroad crossing identification information.

3. The ground system as defined in claim 1 or 2, wherein
the railroad crossing ground system sends the notification information to be sent in an inbound direction including train incoming direction information indicating the inbound direction, and sends the notification information to be sent in an outbound direction including train incoming direction information indicating the outbound direction, and
the relay section determines that it is not necessary to relay the notification information if the train incoming direction information included in the notification information received by the reception section is different from the direction from the ground system to the railroad crossing related to the notification information.

4. The ground system as defined in any one of claims 1 to 3, wherein
the notification information further includes an ID of the notification information and information indicating the number of relay counts that is the number of times the notification information was relayed, and
if a plurality of pieces of the notification information with the same ID are received by the reception section, the relay section determines the notification information that includes the smallest number of relay counts and includes the railroad crossing identification information that matches the relay-required railroad crossing identification information, as the notification information to be relayed, updates the number of relay counts included in the determined notification information, and relays the determined notification information.

5. The ground system as defined in any one of claims 1 to 4, comprising a function of the railroad crossing ground system.

6. A relay control method for a ground system to relay notification information sent by a railroad crossing ground system using a predetermined wireless communication protocol, wherein
the wireless communication protocol is a communication protocol under which an onboard system of a train is capable of receiving information,
the railroad crossing ground system is a system that sends the notification information including an instruction to the train based on detection information on a railroad crossing trouble and railroad crossing identification information of a railroad crossing related to the railroad crossing ground system in association with each other, and
the relay control method comprises:
storing the railroad crossing identification information of the railroad crossing that is a relay target of the notification information, as relay-required railroad crossing identification information;
receiving the notification information; and
determining whether to relay the railroad crossing identification information included in the received notification information through comparison with the relay-required railroad crossing identification information, and if a result of the determination is affirmative, relaying the received notification information using the wireless communication protocol.
